# EUROPÄISCHE PATENTANMELDUNG

(11) **EP 0 746 173 A2**
(43) Veröffentlichungstag der Anmeldung: **04.12.1996**
(21) Anmeldenummer: 96108545.3
(22) Anmeldetag: 29.05.1996
(51) Int. Cl.: H04Q 11/00

(54) **Optisch gesteuertes optisches Koppelmodul**

(30) Priorität: 02.06.1995 DE 19519735
(71) Anmelder: Alcatel SEL Aktiengesellschaft, D-70435 Stuttgart (DE); ALCATEL N.V., NL-2288 BH Rijswijk (NL)
(72) Erfinder: Dembeck, Lars, 70563 Stuttgart (DE); Lach, Eugen, Dr., 71672 Marbach (DE); Schmitz, Jörg, 51469 Bergisch-Gladbach (DE)
(74) Vertreter: Knecht, Ulrich Karl, Dipl.-Ing.

(57) **Zusammenfassung**

Die Erfindung betrifft ein optisch gesteuertes optisches Koppelmodul (SM1) sowie ein Verfahren zum optischen Steuern eines optischen Koppelnetzes und ein optisches Koppelnetz. Das optische Koppelmodul (SM1) ist mit mindestens einem über einen optischen Steuereingang (CONTR) zu steuernden optischen Schalter (OCOSW) versehen, der ein optisches Nutzsignal schaltet. Das optische Koppelmodul (SM1) weist weiter einen mit diesem Steuereingang (CONTR) verbundenen optischen Impulsumformer (PW) auf, der aus einem optischen Steuersignal geeignete Schaltimpulse für den optischen Schalter (OCOSW) erzeugt. Das optische Koppelnetz weist mindestens ein optisches Koppelmodul (SM1) auf. Steurerbits eines optischen Datenpaketes werden im optischen Koppelnetz mittels optischer Schalter (OSW) einzeln optisch ausmaskiert und die den jeweiligen Steuerbits (CB1 bis CB4) entsprechenden optischen Steuersignale werden jeweils einem der optischen Impulsumformer (PW) zugeführt.

## Beschreibung

Die Erfindung betrifft ein optisch angesteuertes optisches Koppelmodul nach dem Oberbegriff von Anspruch 1, ein Verfahren zur optischen Steuerung eines optischen Koppelnetzes nach dem Oberbegriff von Anspruch 5 und ein optisches Koppelnetz nach dem Oberbegriff von Anspruch 8.

Bei Breitband-Kommunikationsnetzen werden Daten in zunehmendem Maße in Form von optischen Signalen über Glasfaserleitungen übertragen. Aufgrund der technologischen Schwierigkeiten werden jedoch für die Vermittlung der Daten meist immer noch elektrische Koppelnetze mit elektrischen Koppelpunkten verwendet, was insbesondere Geschwindigkeitsnachteile und zusätzlichen Aufwand für die Wandlung von optischen in elektrische Signale verursacht.

Die Erfindung geht nun von einem optischen Koppelnetz aus, das auch auf optischem Wege gesteuert wird und das so eine geschlossene optische Lösung darstellt. Ein solches optisches Koppelnetz wird beispielsweise in der amerikanischen Patentschrift US-4,894,818 beschrieben.

Dieses optische Koppelnetz ist für die Vermittlung von Datenpakten bestimmt und besteht aus einer Vielzahl von optisch gesteuerten optischen Koppelmodulen. Die Steuerinformationen für die einzelnen optischen Koppelmodule werden hierbei jeweils in Form von Steuerimpulses auf einer anderen Wellenlänge als der, auf der die Datenpakete transportiert werden, parallel zu diesen mitgeführt.

Im einzelnen enthält solch ein optisches Koppelelmodul einen nichtlinearen optischen Spiegel, einen optischen Wellenlängenfilter und einen optischen Verstärker. Der nichtlineare optische Spiegel hat die Eigenschaft, einen ankommenden Lichtstrahl hoher Intensität total zu reflektieren und so zu einem ersten Ausgang zu leiten und einen Lichtstrahl geringer Intensität nicht zu reflektieren und so zu einem zweiten Ausgang zu leiten. Er besteht aus einem Halbleiterkristall mit einer großen nichtlinearen Konstante, beispielsweise ZnO. Das Steuersignal wird vor dem nichtlinearen optischen Spiegel mittels des optischen Wellenlängenfilters ausgekoppelt, seine Intensität mit dem optischen Verstärker erhöht und das Steuersignal wird sodann wieder eingekoppelt. So wird bei Vorliegen eines Steuerimpulses das Datenpaket zum ersten Ausgang und bei Fehlen eines solchen Impulses zum zweiten Ausgang geschaltet.

Der Aufbau eines optischen Koppelnetzes mittels solcher optischer Koppelmodule hat den Nachteil, daß zur Steuerung des Koppelnetzes eine Vielzahl von Wellenlängen belegt wird und diese Wellenlängen nicht mehr für die Übertragung weiterer Datenpakete mittels Wellenlängenmultiplex genutzt werden können. Der Aufbau eines wellenlängenunabhängig schaltenden Koppelnetzes wird so erschwert. Weiter ergeben sich Synchronitätsprobleme, da sich die Laufzeiten von Lichtsignalen in Abhängigkeit von deren Wellenlängen unterscheiden.

Weiter sind optische Koppelmodule bekannt, deren Steuerung nicht auf optischem sondern auf elektrischem Wege realisiert ist. Diese Koppelmodule werden zumeist aus elektrisch angesteuerten optischen 2 x 2 Schaltern auf LiNbO₃ - Basis aufgebaut.

Ein Beispiel für solch ein Koppelmodul wird in dem Artikel "First Demonstration of Multihope All-Optical Packet Switching" von D. J. Blumenthal et al, IEEE Photonics Technology Letters, März 1994 beschrieben.

Dieses Koppelmodul besteht aus einem solchen elektrisch angesteuerten optischen 2 x 2 Schalter und einer aufwendigen elektrischen Steuereinrichtung, die diesen Schalter ansteuert. Die Steuersignale werden hierbei ebenfalls auf einer anderen Wellenlänge als das zu vermittelnde Datenpaket geführt.

Ein weiteres Beispiel für solch ein Koppelmodul wird in dem Artikel "All-optical address recognition and self-routing in a 250Gbit/s packet switched network" von I. Glesk et al aus der Zeitschrift Electronics Letters, 4. August 1994, Vol. 30, No. 16 beschrieben.

Mit diesem Koppelmodul werden optische Datenpakete vermittelt, die über einen Paket-Kopf mit mehreren Steuerbits sowie einem Taktbit hoher Intensität verfügen. In dem Koppelmodul wird dieses Taktbit mittels einer optischen Verzögerungsstrecke mit einem vorher festgelegten Steuerbit korreliert, das optische Korrelationsignal in ein elektrisches Signal gewandelt und einem elektrischen Pulsgenerator zugeführt, der den optischen 2 x 2 Schalter schaltet.

Solche optische Koppelmodule haben jedoch den Nachteil, daß zusätzlich zu dem optischen System noch eine elektrisches System unterstützt werden muß und daß Wandler zur Wandelung der optischen Steuersignale in elektrische Steuersignale benötigt werden. Weiter sind durch die elektrische Steuerung bedingt nicht so hohe Geschwindigkeiten wie bei einer rein optischen Lösung erreichbar.

Der Erfindung liegt die Aufgabe zugrunde, die Vermittlung von in optischer Form vorliegenden Datenströmen möglichst ohne Wandlung von optischen in elektrische Signale zu ermöglichen.

Die Aufgabe wird gelöst durch ein optisch angesteuertes optisches Koppelmodul nach dem Oberbegriff von Anspruch 1, durch ein Verfahren zur optischen Steuerung eines optischen Koppelnetzes nach dem Oberbegriff von Anspruch 5 und durch ein optisches Koppelnetz nach dem Oberbegriff von Anspruch 8.

Der Grundgedanke der Erfindung ist, ein optisches Koppelmodul aus optisch gesteuerten optischen Schaltern aufzubauen, die über einen optischen Steuereingang von einem optischen Impulsumformer angesteuert werden. Mittels dieses Impulsumformers wird aus einem optischen Steuersignal ein an das Schaltverhalten des optischen Schalters und an die Struktur der zu vermittelnden optischen Datenströmen angepaßte optische Steuerimpulse erzeugt, die den optischen Schalter sicher schalten und ihn von einer vorausgehenden optischen Auswertung des Steuersignals entkoppeln. Diese Kombination eignet sich auf vorteilhafte Weise als gut integrierbare Grundstruktur für den Aufbau beliebig großer optisch gesteuerter optischer Koppelnetze.

Vorteilhafte Ausgestaltung der Erfindung sind den Unteransprüchen zu entnehmen.

Hierbei ist es insbesondere vorteilhaft, den optisch gesteuerten optischen Schalter aus einem Mach-Zehnder-Inferometer aufzubauen. Dieses Bauelement wird für den Aufbau von optischen Wellenlängenwandlern verwendet und bietet insbesondere den Vorteil, daß damit ein wellenlängenunabhängiges Raumschalten mit hoher Schaltgeschwindigkeit möglich ist.

Weiter ist vorteilhaft, solche Grundstrukturen für die Vermittlung von optischen Datenpaketen zu Verwenden, die über einen Paket-Kopf verfügen und deren Weg durch ein Koppelnetz durch Steuerbits des Paket-Kopfes bestimmt wird. Die optische Auswertung dieser Steuerinformationen kann hierbei allein in der optischen Ausmaskierung der einzelnen Steuerbits bestehen, die sodann direkt als Steuersignale den optischen Impulsumformern zugeführt werden. Auf diese Weise ist es möglich, mit geringem Bauelementeaufwand beliebig große optische Koppelnetze aufzubauen, die mit hoher Schaltgeschwindigkeit arbeiten.

Im folgenden wird die Erfindung anhand zweier Ausführungsbeispiele unter Zuhilfenahme bei liegender Zeichnungen weiter erläutert.
- Fig. 1: zeigt ein Blockschaltbild eines erfindungsgemäßen Koppelnetzes für ein erstes Ausführungsbeispiel.
- Fig. 2: zeigt ein Blockschaltbild eines erfindungsgemäßen Koppelmoduls für das Koppelnetz nach Fig. 1.
- Fig. 3: zeigt ein Blockschaltbild eines erfindungsgemäßen Koppelmoduls für ein zweites Ausführungsbeispiel.
- Fig. 4: zeigt ein Blockschaltbild einer Koppelmatrix für das Koppelmodul nach Fig. 3.

Im ersten Ausführungsbeispiel wird der Aufbau eines erfindungsgemäßen Koppelnetzes beschrieben, das von mehreren erfindungsgemäßen Koppelmodulen gebildet wird, die mittels eines erfindungsgemäßen Verfahrens optisch gesteuert werden.

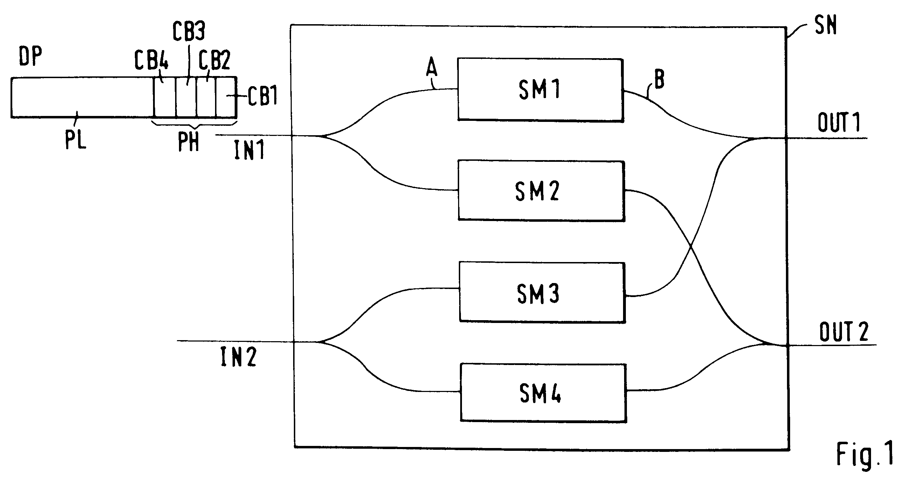

Fig. 1 zeigt ein optisches Koppelnetz SN mit zwei optischen Eingängen IN1 und IN2 und zwei optischen Ausgängen OUT1 und OUT2 sowie ein Datenpaket DP, das an dem Eingang IN1 ankommt.

Das optische Koppelnetz SN dient der Vermittlung von Datenpaketen, die an einen der optischen Eingänge IN1 und IN2 ankommen. Es weist vier optische Koppelmodule SM1 bis SM4 auf, von denen das optische Koppelnetze SM1 über einen Eingang A und einen Ausgang B verfügt. Der Eingang IN1 ist über das optische Koppelmodul SM1 mit dem Ausgang OUT1 sowie über das optische Koppelmodul SM2 mit dem Ausgang OUT2 verbunden. Weiter ist der Eingang IN1 über das optische Koppelmodul SM3 mit dem Ausgang OUT1 sowie über das optische Koppelmodul SM4 mit dem Ausgang OUT2 verbunden.

Die optischen Koppelmodule SM1 bis SM4 sind gleich aufgebaut und schalten aufgrund von in einem Datenpaket mitgeführten Steuerinformationen dieses Datenpaket zu einem der Ausgänge OUT1 oder OUT2 durch oder blockieren es. Die Auswertung der Steuerinformation sowie das Schalten des Datenpaketes wird hierbei auf rein optischem Wege realisiert.

An dem optischen Koppelnetz SN kommen Datenpakete konstanter Länge an, wobei mögliche Ankunftszeitpunkte von Daten-Paketen einem bestimmten Rahmentakt entsprechen. Dieser Rahmentakt ist hierbei so ausgelegt, daß eine Taktperiode länger als die einem Daten-Paket entsprechende Zeitdauer ist und so zwischen zwei direkt aufeinanderfolgenden Datenpaketen ein auch als guard band bezeichneter Sicherheits-Zeitabschnitte liegt.

Der Aufbau eines solchen Datenpakets wird nun beispielhaft anhand des Datenpaketes DP erläutert:
Das Datenpaket DP wird in Form von digitalen optischen Signalen übertragen. Es besteht aus einem Nutz-Teil PL und einem Paket-Kopf PH, der vier Steuerbits CP1 bis CP4 aufweist.

In dem Nutz-Teil PL werden die von dem Datenpaket DP transportierten Nutz-Daten transportiert. Der Nutz-Teil hat hierbei beispielsweise eine Länge von 48 Byte. Es ist jedoch auch vorteilhaft, sehr große Datenpakete zu verwenden, die beispielsweise eine Länge von 20.000 Bit haben.

Der Paket-Kopf PH dient der Vermittlung des Datenpaketes DP durch das optische Koppelnetz SN. Seine ersten beiden Steuerbits CP1 und CP2 bezeichnen hierzu denjenigen der beiden Ausgänge OUT1 und OUT2 des optischen Koppelnetzes SN, zu dem das Datenpaket DP geleitet werden soll. Die restlichen beiden Steuerbits CP3 und CP4 bezeichnen den Ausgang eines weiteren, hier nicht gezeigten Koppelnetzes, das der weiteren Vermittlung des Datenpaketes DP dient.

Es ist auch möglich, daß in dem Paket-Kopf PH eine andere Anzahl von Steuerbits transportiert wird. Wenn beispielsweise mehrere, dem Koppelnetz SN entsprechende Koppelnetze hintereinandergeschaltet werden, so sind für jedes dieser Koppelnetze zwei Steuerbits notwendig.

Es ist auch möglich, andere Codierungsschemas für die Wegesuche durch mehrere solcher hintereinandergeschalteter Koppelnetze zu verwenden, die beispielsweise ein bestimmtes Steuerbit in mehreren der Koppelnetze auswerten.

Das an dem optischen Eingang IN1 ankommende Datenpaket DP wird sowohl zum optischen Koppelmodul SM1 als auch zum optischen Koppelmodul SM2 geleitet. Die optischen Koppelmodule SM1 und SM2 werten nun das Steuerbit CP1 bzw. CP2 aus und leiten das Datenpaket DP an den optischen Ausgang OUT1 bzw. OUT2 weiter, wenn das Steuerbit CP1 bzw. CP2 gesetzt ist. Ansonsten blockieren sie das Datenpaket DP. Für ein an dem optischen Eingang IN2 ankommendes Datenpaket gilt entsprechendes, d. h., daß das Datenpaket an den Ausgang OUT1 weitergeleitet wird, wenn das dem Steuerbit CP1 entsprechenden Steuerbit dieses Datenpakets gesetzt ist und es zum Ausgang OUT2 weitergeleitet wird, wenn das dem Steuerbit CP2 entsprechende Steuerbit gesetzt ist. Ein an einem der optischen Eingänge IN1 oder IN2 ankommendes Datenpaket wird also, wenn das dem Steuerbit CP1 entsprechende Steuerbit gesetzt ist, zum optischen Ausgang OUT1, wenn das dem Steuerbit CP2 entsprechende Steuerbit gesetzt ist, zum optischen Ausgang OUT2 und wenn diese beiden Steuerbits gesetzt sind zu beiden optischen Ausgängen OUT1 und OUT2 geleitet und so kopiert.

Es ist möglich, das optische Koppelnetz SN als Grund-Koppelelement für den Aufbau beliebig großer optischer Koppelnetze zu verwenden. Die Struktur solcher Koppelnetze könnte beispielsweise der von Banyan-Netzen, Butcher-Banyan-Netzen oder auch solchen Netzen mit einem vorangehenden Sortiernetz oder einer Rückspeisung entsprechen. Insbesondere durch die Verwendung solcher Sortiernetze kann sichergestellt werden, daß keine Blockierungen innerhalb der dem Koppelnetz SN entsprechenden Grund-Koppelelemente auftreten können.

Es ist auch möglich, daß das Koppelnetz SN eine andere Struktur hat und über eine andere Anzahl von optischen Ein- oder Ausgängen verfügt. Bei dem Aufbau solcher Koppelnetze würde zwischen jedem der Eingänge und jedem der Ausgänge jeweils ein den optischen Koppelmodulen SM1 bis SM4 entsprechendes optisches Koppelmodul geschaltet. Es wären so bei n Eingängen und m Ausgängen n x m optische Koppelmodule notwendig.Der Paket-Kopf der an einem solchen optischen Koppelnetz ankommenden Datenpakete müßte mindestens m Steuerbits enthalten, eines für jeden Ausgang. Die mit dem ersten Ausgang verbundenen optischen Koppelmodule würden so beispielsweise ein Datenpaket an diesen optischen Ausgang weiterleiten, wenn das erste Steuerbit des Paket-Kopfes gesetzt wäre, die mit dem zweiten Ausgang verbundenen Koppelmodule, wenn das zweite Steuerbit des Paket-Kopfes gesetzt wäre, usw.

Der genaue Aufbau der Koppelmodule SM1 bis SM4 wird nun beispielhalft anhand des Aufbaues des optischen Koppelmoduls SM1 erläutert.

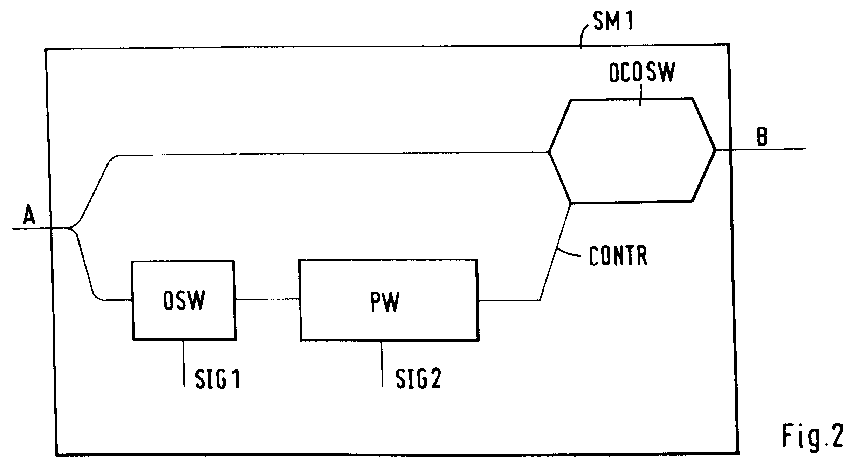

Fig. 2 zeigt das optische Koppelmodul SM1 mit dem optischen Eingang A und dem optischen Ausgang B. Das optische Koppelmodul SM1 weist einen optischen Schalter OSW, eine optischen Impulsumformer PW und einen optisch angesteuerten optischen Schalter OCOSW mit einem optischen Steuereingang CONTR auf. Der optische Eingang A ist über einen optischen Leiter mit dem optischen Schalter OCOSW verbunden, der seinerseits über einen optischen Leiter mit dem optischen Ausgang B verbunden ist. Weiter ist der optische Eingang A über einen optischen Leiter mit dem optischen Schalter OSW verbunden, der seinerseits über einen optischen Leiter mit dem optischen Impulsumformer PW verbunden ist, der wiederum über einen optischen Leiter mit dem optischen Steuereingang CONTR verbunden ist. An dem optischen Schalter OSW liegt eine Taktsignal SIG1 und an dem optischen Impulsumformer ein Taktsignal SIG2 an.

Bei dem optisch angesteuerten optischen Schalter OCOSW handelt es sich um ein Mach-Zehnder-Inferometer. In diesem wird durch unterschiedliche Ausbereitungsgeschwindigkeiten eine Phasenverschiebung der Trägerwellenlängen zur gesteuerten Ausblendung eines Signals genutzt. Da die Ausbreitungsgeschwindigkeiten von der Brechzahl des Übertragungsmediums abhängen und diese eine Abhängigkeit von der eingestrahlten Lichtintensität zeigt, kann die gewünschte Phasenverschiebung über die Einkoppelung eines Lichtimpuls definierte Intensität über den Steuereingang CONTR erreicht werden. Damit ergibt sich die Möglichkeit, mittels eines solchen Mach-Zehnder-Inferometers einen optisch gesteuerten optischen Schalter zu realisieren.

Der Aufbau eines für den optischen Schalter OCOSW verwendbaren Mach-Zehnder-Inferometers kann beispielsweise dem Aufbau des als "three-port MZI" bezeichneten Mach-Zehnder-Inferometers entsprechen, der in dem Artikel "Wavelength converter based on integrated all-active three-port Mach-Zehnder inferometer" von M. Schilling, S. 2128 bis S.2129 der Zeitschrift "Electronics Letters", 8. Dezember 1994, Vol. 30, No. 25 beschrieben ist. Der dort beschriebene Mach-Zehnder-Inferometer wird als optischer Wellenlängenwandler Verwendet. Um ihn als optischen Schalter zu verwenden, wird das Signal mit der zu wandelnden Wellenlänge durch das Steuersignal ersetzt. Es ist auch möglich, anstelle eines Mach-Zehnder-Inferometers andere optisch gesteuerte optische Schalter zu verwenden. Als solche Schalter könnten beispielsweise nichtlineare optische Spiegel oder sättigbare Absorber dienen.

Der optische Impulsumformer PW besteht aus einen Laser mit sättigbarem Absorber. Der genaue Aufbau eines solchen Lasers wird beispielsweise in dem Buch "Laser", von F. K. Kneubühl und M. G. Sigrist, erschienen in der Reihe Teubner Studienbücher, 1991, beschrieben.

Bei einem solchen Laser mit sättigbarem Absorber ist in dem Laser-Resonator ein Absorber eingebaut, der den betriebsbereiten Laser an der Lichtemission hindert. Erfolgt nun eine Sättigung über einen von außen zugeführten Lichtimpuls, so beginnt der Laser zu strahlen. Durch eine geeignete Platzierung des Absorbers im Resonator, bei der die Verstärkung des Lichtimpulses im Laser ausgenutzt wird, kann hierbei die erforderliche Energie dieses Lichtimpulses recht gering gehalten werden. Hat der Laser zu strahlen begonnen, so wird dabei genügend Lichtenergie frei, um den Absorber weiterhin gesättigt zu halten. Der Laser gibt so solange einen Lichtstrahl ab, bis er abgeschaltet wird. Das Abschalten des Lasers wird hierbei durch das Taktsignal SIG2 gesteuert.

Es ist auch möglich, daß die Zeitdauer, während derer der Laser strahlt, nicht durch das Taktsignal SIG2 festgelegt wird, sondern daß der Laser selbst nach einer bestimmten Zeitdauer die Lichtemission beendet. Dieser Effekt kann dadurch erreicht werden, daß das Absorbtionsmaterial so gewählt wird, daß nach einer ersten Emission, die zwischen einer Mikrosekunde und einer Pikosekunde liegt, die im Laser verbleibende Energie nicht mehr für weitere Emissionen ausreichend ist. Für die Auswahl hierfür geeigneter Absorber wird auf das oben zitierte Buch verwiesen.

Es ist auch möglich, den optischen Impulsumformer PW mittels eines optischen Flipflops aufzubauen. Ein solches optisches Flipflop könnte beispielsweise mittels Mach-Zehnder-Inferometer aufgebaut werden. Die Verschaltung der Mach-Zehnder-Inferometer würde sich hierbei an dem entsprechenden Aufbau eines elektrischen Flipflops orientieren. Auch ein Aufbau eines solchen optischen Flipflops mittels elektrisch angesteuerter Schalter, wie beispielsweise mittels Y-Laser, wäre möglich.

Der optische Schalter OSW ist ein von dem elektrischen Signal SIG1 angesteuerter optischer Schalter. Bei diesem optischen Schalter handelt es sich um einen optischen Halbleiterverstärker (SOA = Semiconductor Optical Amplifier). Es ist jedoch auch möglich, anstelle eines optischen Halbleiterverstärkers einen Mach-Zehnder-Inferometer mit elektrischem Steuereingang oder einen Elektro-Absorbtions-Modulator zu verwenden. Diese Bauelemente werden beispielsweise in dem Kapitel "14.5 optoelektronische Bauelemente für optische Vermittlungstechnik", Seiten 342 bis 348, aus dem Buch "Halbleiter für die Optoelektronik und Photonik" von A. Dörner et al, erschienen im Verlag Dr. Markus Hensel-Hohenhausen, 1994 beschrieben.

Das an dem optischen Eingang A ankommendes Datenpaket DP wird so wie folgt von dem optischen Koppelelement SM1 verarbeitet:
Das Datenpaket DP wird vom optischen Eingang A über einen Lichtwellenleiter zum optischen Schaltern OCOSW geleitet. Aus diesem optischen Leiter wird ein Teil des Lichts ausgekoppelt und so eine Kopie des Datenpakets DP zum optischen Schalter OSW geleitet. Der optische Schalter OSW wird von dem elektrischen Signal SIG1 so angesteuert, daß er genau während der Zeitperiode, die dem Steuerbit CP1 entspricht, den ankommenden Lichtstrahl an den optischen Impulsumformer PW weiterleitet und während der restlichen Zeit den Lichtstrahl blockiert. Der optische Schalter OSW maskiert so das Steuerbit CP1 aus dem Paket-Kopf PH des ankommenden Datenpakets DP aus.

Ist das Steuerbit CP1 gesetzt, so empfängt der optische Impulsumformer PW einen kurzen Lichtimpuls, der von diesem in einen optischen Steuerimpuls längerer Dauer umgewandelt wird. Ist das Steuerbit CB1 dagegen nicht gesetzt, so wird kein Lichtimpuls an den optischen Impulsumformer PW gesendet und dieser erzeugt so auch keinen optischen Steuerimpuls.

Der Laser mit sättigbarem Absorber, der den optischen Impulsumformer PW bildet, ist hierbei so dimensioniert, daß die Energie des gesetzten, ausgekoppelten Steuerbits CP1 ausreicht den Laser zu zünden. Es ist hierbei auch möglich, die Energie des an dem Laser mit sättigbarem Absorber ankommenden Lichtimpulses dadurch zu erhöhen, daß ein höherer Anteil der Signalenergie in den Zweig mit dem optischen Schalter OCW und den optischen Impulsumformer PW ausgekoppelt wird.

Der Laser mit sättigbarem Absorber ist weiter so zu dimensionieren, daß die Energie des abgegebenen Steuerimpulses ausreicht, den Mach-Zehnder-Inferometer zu schalten.

Die Dauer des Steuerimpulses wird durch das elektrische Taktsignal SIG2 bestimmt. Diese Dauer ist hierbei so gewählt, daß sie zwischen der Dauer der Taktperiode des Rahmentaktes und einer Dauer liegt, die der Länge des Datenpaketes DP entspricht.

Von einem Taktgenerator werden so die Taktsignale SIG1 und SIG2 wie folgt bereitgestellt: Das Taktsignal SIG1 besteht aus Taktimpulsen, deren Breite der Dauer des Steuerbits CP1 entspricht und die jeweils einmal innerhalb des Rahmentaktes zu einem Zeitpunkt gesetzt werden, an dem das Steuerbit CP1 an dem optischen Schalter OSW1 ankommen müßte. Das Taktsignal SIG2 besteht aus Taktimpulsen, die jeweils am Ende eines Rahmentaktes den Laser abschalten, der den Impulsumformer PW bildet.

Es ist auch möglich, daß die Taktsignale SIG1 und SIG2 als optische Taktsignale bereitgestellt werden. Der optische Schalter OSW würde hierzu beispielsweise ebenfalls von einem Mach-Zehnder-Inferometer gebildet. Es ist weiter möglich auf das Taktsignal SIG2 zu verzichten, wenn der Laser mit sättigbarem Absorber so dimensioniert wird, daß er jeweils nur für die der Länge des Datenpaketes DP entsprechende Zeitdauer strahlt.

Es weiter möglich, daß der Taktgenerator neben den Taktsignalen SIG1 und SIG2 auch die diesen Taktsignalen entsprechenden Taktsignale für die Koppelmodule SM2 bis SM4 erzeugt. Die Taktsignale wären hierbei jeweils entsprechend des ausgewerteten Steuerbits gegeneinander verzögert.

Bei einem gesetzten Steuerbit CP1 empfängt so der optisch angesteuerte optische Schalter OCOSW einen optischen Steuerimpuls einer Dauer, die mindestens der Dauer des Datenpaketes DP entspricht. Der optische Schalter OCOSW wird so für diese Zeitdauer durchlässig und das Daten-Pakte DP wird so zum optischen Ausgang B geleitet.

Es ist auch möglich, den optisch angesteuerten optischen Schalter OCOSW so aufzubauen, daß er bei Anliegen eines optischen Steuerimpulses sperrt und bei Nichtanliegen eines solchen optischen Steuerimpulses durchlässig ist. Dadurch würde ein gegensätzliches Schaltverhalten erreicht, d. h. ein zum obigen Koppelmodul inverses Koppelmodul bereitgestellt, das nur ein Datenpaket mit nichtgesetztem Steuerbit weiterleiten.

Ein solches Verhalten des optisch angesteuerten optischen Schalters OCOSW kann bei einem Mach-Zehnder-Inferometer durch eine entsprechend andere Einstellung des Arbeitspunktes durch die Veränderung der Stromwerte in den Parallelarmen des Mach-Zehnder-Inferometers erreicht werden.

Es ist möglich und u.U vorteilhaft, optische Koppelnetze aus den optischen Koppelmodulen SM1 bis SM2 entsprechenden Koppelmodulen und solchen inversen optischen Koppelmodulen aufzubauen.

Es ist weiter möglich, in den optischen Pfad zwischen dem optischen Eingang A und dem optischen Schalter OCOSW eine optische Verzögerungsstrecke einzufügen, die das Daten-Paket DP um die Zeitdauer verzögert, die für die Erzeugung des Steuerimpulses durch den optischen Schalter OSW und den Impulsumformer PW benötigt wird. Aufgrund der schnellen Schalteigenschaften der hierfür verwendeten Bauelemente dürfte das Einfügen einer solchen Verzögerungsstrecke jedoch im Regelfall nicht notwendig sein.

Es ist weiter möglich, das Koppelmodul SM1 für die Vermittlung von Daten-Paketen auszulegen, deren mögliche Ankunftszeitpunkte nicht einem bestimmten Rahmentakt entsprechen und die nicht alle dieselbe Länge besitzen. Das Steuersignal für den optischen Impulsumformer PW kann hierbei durch Korrelation eines mitgeführten Taktimpulses oder einer mitgeführten Synchronisationsbitfolge mit einem speziellen Steuerbit innerhalb des Paketkopfes bereitgestellt werden. Das dem Korrelations-Ergebnis entsprechende optische Signal würde hierbei als Steuersignal verwendet. Solche Verfahren könnten auch für die Auswertung der Steuerinformationen für das Koppelmodul SM1 nach Fig. 2 verwendet werden.

In einem zweiten Ausführungsbeispiel wird nun eine weitere Möglichkeit für den Aufbau eines erfindungsgemäßen optischen Koppelmoduls aufgezeigt. Für die Einbindung eines solchen Koppelmoduls innerhalb eines Koppelnetzes gilt das nach Fig. 1 zur Einbindung des Koppelnetzes KN in ein übergeordnetes Koppelnetz gesagte entsprechend.

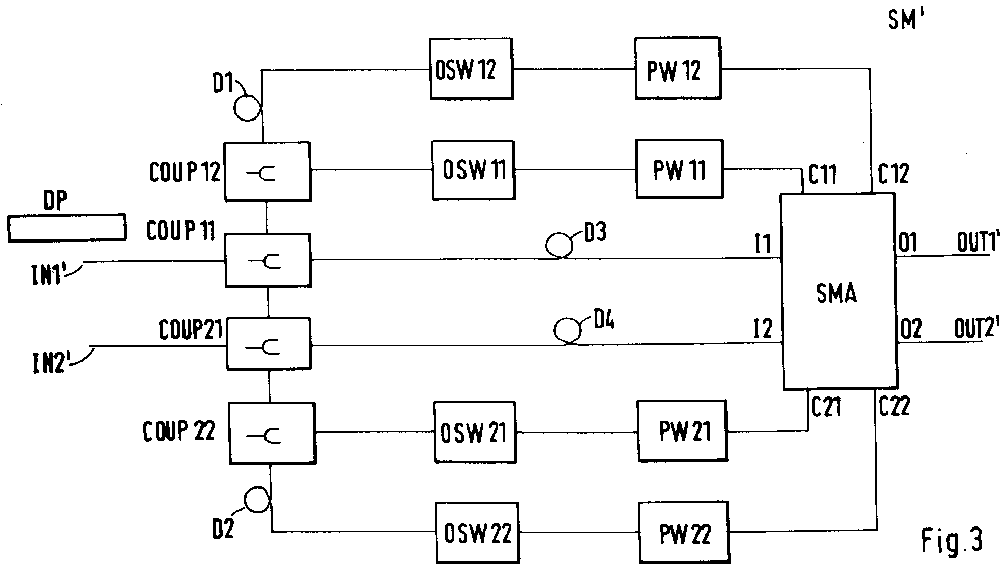

Fig. 3 zeigt ein optisches Koppelmodul mit zwei optischen Eingängen IN1' und IN2', zwei optischen Ausgängen OUT1' und OUT2', vier optischen Kopplern COUP11 bis COUP22, vier optischen Schaltern OSW11 bis OSW 22, vier optischen Impulsumformern PW11 bis PW22, vier optischen Verzögerungeelementen D1 bis D4 und einer optischen Koppelmatrix SMA. Die optischen Schalter OSW11 bis OSW22 werden von einem Taktsignalen SIG1' gesteuert. Die optischen Impulsumformer PW11 bis PW22 werden von einem Taktsignalen S1G2' gesteuert. An dem optischen Eingang IN1' kommt das Datenpaket DP an. Die optische Koppelmatrix SMA weist zwei Eingänge I1 und I2, zwei Ausgänge O1 und O2 sowie vier Steuereingänge C11 bis C22 auf.

Die optischen Eingänge IN1' und IN2' sind über die Koppler COUP11 bzw. COUP21 sowie über die optischen Verzögerungselemente D3 bzw. D4 mit den Eingängen I1 bzw. I2 verbunden. Die Koppler COUP11 und COUP21 sind mit den Kopplern COUP12 bzw. COUP22 verbunden. Die Steuereingänge C11 und C21 sind über die optischen Impulsumformer PW11 bzw. PW21 und über die optischen Schalter OSW11 bzw. OSW21 mit den Kopplern COUP12 bzw. COUP22 verbunden. Die Steuereingänge C12 und C22 sind über die optischen Impulsumformer PW12 bzw. PW22, über die optischen Schalter OSW12 bzw. OSW22 und über die optischen Verzögerungselemente D1 bzw. D2 mit den optischen Kopplern COUP12 bzw. COUP22 verbunden. Die Ausgänge O1 und O2 sind mit den Ausgängen OUT1' und OUT2' verbunden.

Die optischen Schalter OSW11 bis OSW22 sowie die optischen Impulsumformer PW11 bis PW22 sind wie der optische Schalter OSW bzw. der optische Impulsumformer PW nach Fig. 2 aufgebaut. Für die Taktsignale SIG1' und SIG2' gilt das zu den Taktsignalen SIG1 bzw. SIG2 nach Fig.2 gesagte analog.

Bei den Kopplern COUP11 bis COUP22 handelt es sich um gebräuchliche optische Koppler, die einen in einer Faser geführten Lichtstrahl auf zwei Fasern aufteilen.

Bei den optischen Verzögerungselementen D1 bis D4 handelt es sich um gebräuchlich optische Verzögerungselemente, beispielsweise Faserschleifen. Die Verzögerungselemente D1 und D2 verzögern hierbei einen eintreffenden Lichtstrahl um eine Zeitspanne, die der Dauer eines Steuerbits entspricht. Die Verzögerungselemente D3 und D4 verzögern einen eintreffenden Lichtstrahl um einen Zeitdauer, die für die Auswertung des Paket-Kopfes notwendig ist.

Das an dem optischen Eingang IN1' ankommendes Datenpaket DP wird zum einen durch das optische Verzögerungselement D3 verzögert dem Eingang I1 zugeführt und zum andern den beiden optischen Schaltern OSW11 und OSW12 zugeführt. Das Datenpaket DP wird hierbei dem optischen Schalter OSW12 im Vergleich zu dem optischen Schalter OSW11 um die Dauer eines Steuerbits verzögert zugeführt. Diese Verzögerung wird durch das Verzögerungselement D1 erreicht. So kommt dann beispielsweise das Steuerbit CP1 am optischen Schalter OSW12 zur gleichen Zeit wie das Steuerbit CP2 am optischen Schalter OSW11 an. Das am optischen Eingang IN1' in serieller Form anliegende Datenpaket DP wird somit durch diese Verzögerungsanordnung parallelisiert.

Die beiden optischen Schalter OSW11 und OSW12 werden beide vom Taktsignal SIG1' derart angesteuert, daß sie zu dem Zeitpunkt, an dem üblicherweise die Steuerbits CP1 und CP2 an den optischen Schaltern OSW12 bzw. OSW11 anliegen, diese für die anliegenden Lichtstrahlen durchlässig werden und ansonsten die Lichtstrahlen blockieren.

Die optischen Impulsumformer PW11 und PW12 werden gleichzeitig vom Taktsignal SIG2' angesteuert. Für die Wahl der Taktsignale SIG1' und SIG21' gelten hierbei sinngemäß die Beziehung wie bei den Taktsignalen SIG1 und SIG2 nach Fig. 2. Ist so das Steuerbit CP1 gesetzt, so wird von dem optischen Impulsumformer PW12 ein Steuerimpuls von einer Dauer erzeugt, der der Länge des Daten-Paket DP entspricht. Ist gleichzeitig das Steuerbit CP2 gesetzt, so wird vom optischen Impulsumformer PW11 zum selben Zeitpunkt derselbe Impuls erzeugt.

Kommt ein optisches Datenpaket am Eingang IN2' an, so wird es auf analoge Weise wie das Datenpaket DP nun von den optischen Schaltern OSW21 und OSW22 und den optischen Impulsumformern PW21 und PW22 verarbeitet.

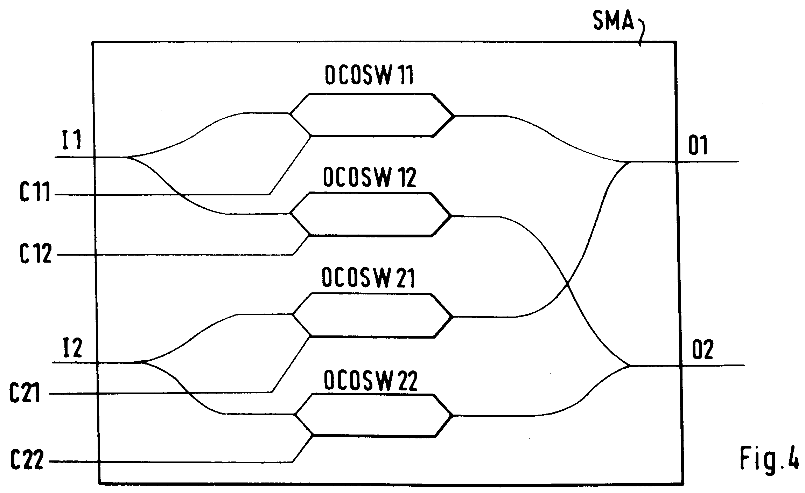

Fig. 4 zeigt die optische Koppelmatrix SMA mit den zwei Eingängen I1 und I2, den zwei Ausgängen O1 und O2 und den vier Steuereingängen C11 bis C22. Die Koppelmatrix SMA weist vier optisch gesteuerte optische Schalter OCOSW11 bis OCOSW22 auf. Der Eingang I1 ist über den optischen Schalter OCOSW11 mit dem Ausgang O1 und über den optischen Schalter OCOSW12 mit dem Ausgang O2 verbunden. Der Eingang I2 ist über den optischen Schalter OCOSW21 mit dem Ausgang O1 und über optischen Schalter OCOSW22 mit dem Ausgang O2 verbunden. Die optischen Schalter OCOSW11 sind mit den Steuereingängen C11, C12, C21 bzw. C22 verbunden.

Die optisch gesteuerten optischen Schalter OCOSW11 bis OCOSW22 sind wie der optisch gesteuerte optische Schalter OCOSW nach Fig. 2 aufgebaut, wobei die Steuereingänge C11 bis C22 dem optischen Steuereingang CONTR des optischen Schalters OCOSW entsprechen.

Ist so das dem Steuerbit CP1 entsprechende Steuerbit in einem Datenpaket gesetzt, so wird es von dem optischen Schalter OCOSW11, wenn es am Eingang IN1 angekommen ist, oder vom optischen Schalter OCOSW21, wenn es am Eingang IN2 angekommen ist, zum Ausgang O1 geleitet. Entsprechendes gilt für die optischen Schalter OCOSW12 und OCOSW22, wenn das dem Steuerbit CP2 entsprechende Steuerbit in einem ankommenden Datenpaket gesetzt ist.

Es ist möglich, das Koppelmodul nach Fig. 3 mit einer beliebigen Zahl von n Eingängen und einer beliebigen Zahl von m Ausgängen aufzubauen. Für jeden Eingang würde hierbei ein Schaltung bereitgestellt, die der von den Kopplern COUP11 und COUP12, den Verzögerungselemente D1 und D3 , den optischen Schaltern OSW12, OSW11, OCOSW11 und OCOSW12 sowie von den Impulsumformern PW11 und PW12 gebildeten Schaltungs-Modul entspricht. Für jede Erhöhung der Anzahl der Ausgänge würde in dieses Schaltungs-Modul ein analog zu den Zweigen dieses Schaltungs-Moduls aufgebauter zusätzlicher Schaltungszweig eingefügt, der aus einem Koppler, einem Verzögerungselement, einem optischen Schalter, einen optischen Impulsumwandler und einen optisch angesteuerten optischen Schalter bestÜnde. Analog zu Fig. 3 würde dieser Schaltungszweig dann mit seinem Koppler zwischen das Verzögerungselemt D1 und den optischen Schalter OSW12 eingekoppelt. Für die notwendige Veränderung der Struktur der Koppelmatrix SMA würde das zur Erweiterung des Koppelnetzes nach Fig. 1 gesagte analog gelten.

Es ist weiter möglich, eine Koppelmatrix mit einer anderen Struktur als die der Koppelmatrix SMA zu verwenden. Insbesondere wäre es hierbei möglich, mehrere Stufen von optisch gesteuerten optischen Schaltern hintereinander zu schalten. Jedes Steuerbit könnte hierbei mehrere solcher optisch gesteuerter optischer Schalter ansteuern, so daß beliebige Kodierungsformen für denjenigen Ausgang der Koppelmatrix möglich sind, zu dem ein Datenpaket transportiert werden soll. Mit solchen Kodierungsformen könnte insbesondere die Anzahl der notwendigen Steuerbits reduziert werden.

## Patentansprüche

1. Optisch gesteuertes optisches Koppelmodul (SM1 bis SM4; SM'),
**dadurch gekennzeichnet**, daß das optische Koppelmodul (SM1 bis SM4; SM') mit mindestens einem über einen optischen Steuereingang (CONTR) zu steuernden optischen Schalter (OCOSW; OCOSW11 bis OCOSW22) zum Schalten eines optischen Nutzsignals und einem mit diesem Steuereingang (CONTR) verbundenen optischen Impulsumformer (PW; PW11 bis PW22) versehen ist, der so ausgestaltet ist, daß er aus einem optischen Steuersignal geeignete Schaltimpulse für den optischen Schalter (OCOSW; OCOSW11 bis OCOSW22) erzeugt.

2. Koppelmodul nach Anspruch 1,
dadurch gekennzeichnet, daß der optische Schalter (OCOSW; OCOSW11 bis OCOSW22) eine Mach-Zehnder-Inferometer ist.

3. Koppelmodul nach Anspruch 1,
dadurch gekennzeichnet, daß der Impulsumformer (PW; PW11 bis PW22) ein Laser mit sättigbarem Absorber ist.

4. Koppelmodul nach Anspruch 1,
dadurch gekennzeichnet, daß das Koppelmodul (SM1 bis SM4; SM') mit einem weiteren optischen Schalter (OSW; OSW11 bis OSW22) zum Ausmaskieren von Steuerbits (CB1 bis CB4) aus dem aus einer Folge von Datenpaketen (DP) bestehenden Nutzsignal versehen ist und daß der weitere optische Schalter (OSW; OSW11 bis OSW22) mit dem Impulsumformer (PW; PW11 bis PW22) zur Zuführung der ausmaskierten Steuerbits (CB1 bis CB4) als Steuersignale verbunden ist.

5. Verfahren zur optischen Steuerung eines optischen Koppelnetzes (SN), das der Vermittlung von optischen Datenpaketen (DP) dient,
**dadurch gekennzeichnet**, daß Steuerbits (CB1 bis CB4) eines optischen Datenpaketes (DP) mittels optischer Schalter (OSW; OSW11 bis OSW22) einzeln optisch ausmaskiert werden, daß die den jeweiligen Steuerbits (CB1 bis CB4) entsprechenden optischen Steuersignale jeweils einem optischen Impulsumformer (PW; PW11 bis PW22) zugeführt werden, der daraus geeignete optische Schaltimpulse erzeugt und daß die optischen Schaltimpulse jeweils mindestens einen optischen Schalter (OCOSW; OCOSW11 bis OCOSW22), der der Vermittlung des Datenpaketes (DP) dient, optisch steuern.

6. Verfahren nach Anspruch 5,
dadurch gekennzeichent, daß die in serieller Form vorliegenden Steuerbits (CB1 bis CB4) mittels optischer Verzögerungselemente (D1, D2) parallelisiert werden und sodann den optischen Impulsumformern (PW11 bis PW22) zugeführt werden.

7. Verfahren nach Anspruch 5,
dadurch gekennzeichnet, daß das optische Koppelnetz (SN) aus einer Vielzahl von optischen Koppelmodulen (SM1 bis SM4) aufgebaut wird, die jeweils nur ein einzelnes Steuerbit (CB1 bis CB4) aus dem Datenpaket (DP) ausmaskieren.

8. Optisches Koppelnetz (SM) mit mindestens einem optisch gesteuerten optischen Koppelmodul (SM1 bis SM4; SM') nach Anspruch 1.
